(19) Europäisches Patentamt
European Patent Office
Office européen des brevets

(11) **EP 2 534 329 B1**

(12) **EUROPEAN PATENT SPECIFICATION**

(45) Date of publication and mention
of the grant of the patent:
**12.04.2017 Bulletin 2017/15**

(21) Application number: **11710868.8**

(22) Date of filing: **16.01.2011**

(51) Int Cl.:
*E06B 9/386* (2006.01)   *E06B 9/24* (2006.01)
*E06B 9/28* (2006.01)   *E06B 9/30* (2006.01)
*F21S 11/00* (2006.01)   *F21V 7/00* (2006.01)
*F24J 2/10* (2006.01)   *F24J 2/40* (2006.01)

(86) International application number:
**PCT/IB2011/050185**

(87) International publication number:
**WO 2011/089542 (28.07.2011 Gazette 2011/30)**

(54) **Z-SHAPED VENETIAN BLIND SLATS FOR DAYLIGHT DEFLECTION**

Z-FOERMIGE JALOUSIE-LAMELLE ZUM REFLEKTIEREN DES TAGESLICHTS

LAMELLE POUR STORE VÉNITIEN EN FORME DE "Z" POUR LA REFLEXION DE LA LUMIÈRE NATURELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2010 DE 102010005054**

(43) Date of publication of application:
**19.12.2012 Bulletin 2012/51**

(73) Proprietor: **KÖSTER, Helmut**
**60437 Frankfurt am Main (DE)**

(72) Inventor: **KÖSTER, Helmut**
**60437 Frankfurt am Main (DE)**

(56) References cited:
**DE-A1- 4 310 718     DE-A1- 19 845 424
DE-A1- 19 929 138     US-A- 4 799 526
US-B1- 6 318 441**

## Description

The present invention relates to z-shaped venetian blind slats comprising at least two partial faces for light inflection into the interior space as well as for light deflection back into the outer space.

It has been known to produce reflective slats consisting of two concave partial pieces wherein the first one facing the outer space serves for light deflection to the outside and the second one facing the interior space serves for light deflection into the interior space. The disadvantage of these slats of DE 102 60 711 A1 consists in the low rigidity in case of wind pressure. The slats might crack since, for optical reasons, the central edge may be shaped only as slightly angled. A further disadvantage consists in that the slats, when in the shut-off state, do not close completely. Flat sun, in particular, might still be deflected, via the second partial piece, by deflection onto the under side of the upper slat and hence into the interior space. Hence the venetian blind serves only for shadowing the room not, however, for darkening the room.

US 4,799,526, Figure 9, and DE 199 29 138, Figure 13/14, presenting z-formed louvers with reflective surfaces, whereby a first reflector part, disposed to outside, and a second reflector part, situated to inside, basically are parallel to each other. The disadvantage of this parallel arrangement is the impossibility to close the blinds in order to darken the room and to avoid a visual transmission. Further disadvantage of the parallel orientation of the two reflectors is the impossibility to retro-reflect the overheating sun hitting the first reflector part, but simultaneously redirecting the sun into the depth of the room by the second reflector to the interior. Therefore, it is not possible to realize simultaneously two opposite values: Daylighting of the interior in room depth by light redirection, and passive cooling by retro reflection.

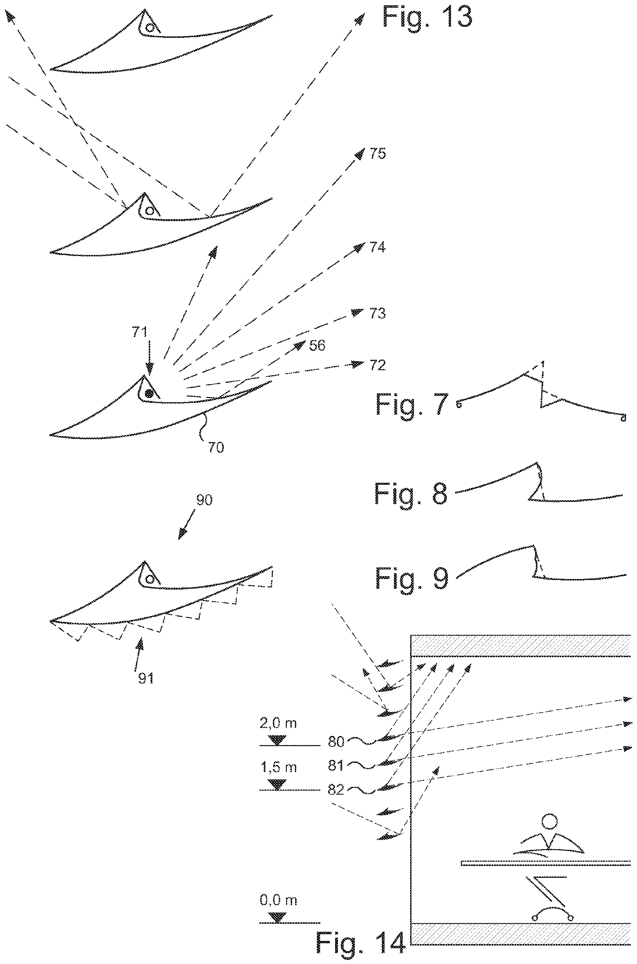

Also z-formed slats in US 4,799,526, Figure 9, show the explained disadvantages caused by the parallel orientation of to the inside and to the outside situated reflector strips of the z-shaped slats.

It has also been known to produce z-shaped slats which display a plurality of inflexions, wherein individual surface areas of their upper side are convex-shaped. These slats which are common nowadays are characterized by a high stiffness.

The disadvantage of these prior art slats consists in the glare on the slat upper sides if they are provided with a shining lacquer or an aluminum-shining reflective surface. In case of open venetian blinds, the convex upper sides scatter the light into the user's eye in the interior room. These glaring effects render it impossible to employ the prior art z-shaped slats for precise light guidance to achieve an optical heat regulation of the solar incidence, and with reflective surfaces.

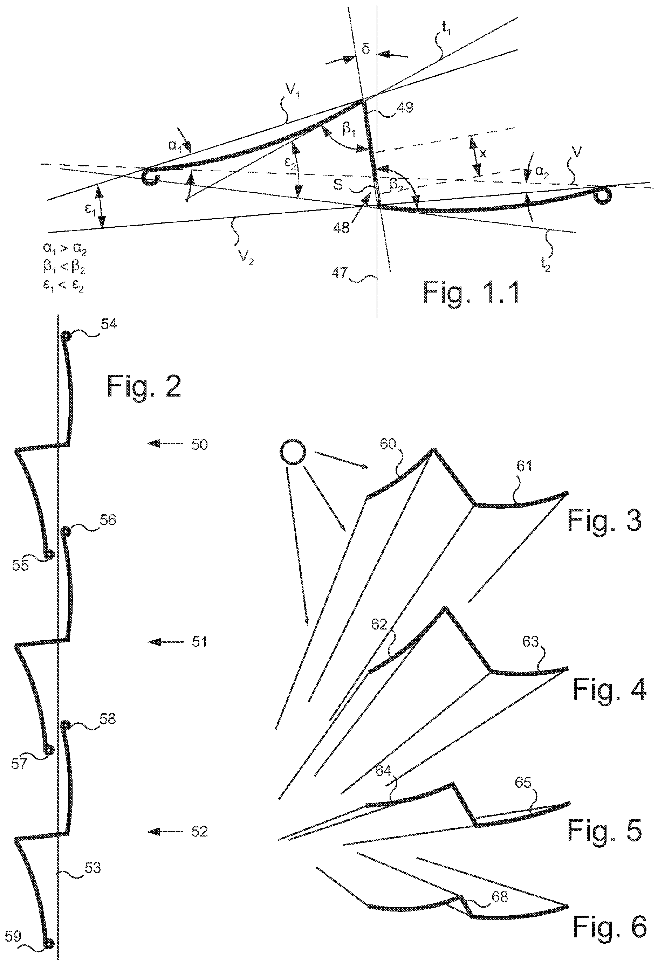

From DE 43 10 718 A1, Figure 5, a three-dimensional light guidance profile has been known the upper side of which has a stepped contour, wherein a few segments of the first retro-reflective concave portion (508) and the segments, together with a second concave portion (509) oriented towards the interior space, form an acute angle relative to each other, wherein the segments of the second portion are disposed steeper than the segments of the first portion. The disadvantage of such designs also known from US 6,318,441 is that with a view to the steeper angle of incidence of the second portion, illumination of the room depth is not possible. If the complete profile is turned more flat in order to effect a more flat light deflection towards the room depth, the sun will also be guided, via the first portion into the interior space while a quantitative control of the relation of solar irradiation to solar reflection and an optical heat control and energy management with a slat curtain is not possible. The desired flat light influx as well as the light deflection will be accomplished only via a second deflection on the under side of the light guidance profile. By the principle of the two-fold deflection or by the fluctuation of the light between the upper sides and the under sides of neighboring profiles, increased non-desired heat development will come up since at each reflection, portion of the radiation is absorbed. Under sides and upper sides form a light guidance system having the disadvantage that in view of the three-dimensional profile shape it is not possible to lift the light guidance system, venetian blinds like, and to join it together to obtain a slat package.

Furthermore, a blind comprising features as mentioned in the preamble of the present claim 1 is described in DE 198 45 424 A1.

It is therefore the task of the present invention to provide a stackable z-shaped slat having a high moment of resistance against mechanical attack and against high wind pressure and to shape at the same time the slats so that they will serve

- as light guidance slats for improved interior space illumination with day light to save electric lighting and, at the same time,
- as sun protection slats against direct sun incidence and, at the same time,
- as light deflection slats for passive cooling and, at the same time,
- for an improved transparency and, in the closed state,
- as a darkening measure.

These development aims will be realized by the characterizing features and the engineering instructions as in accordance with the main claim.

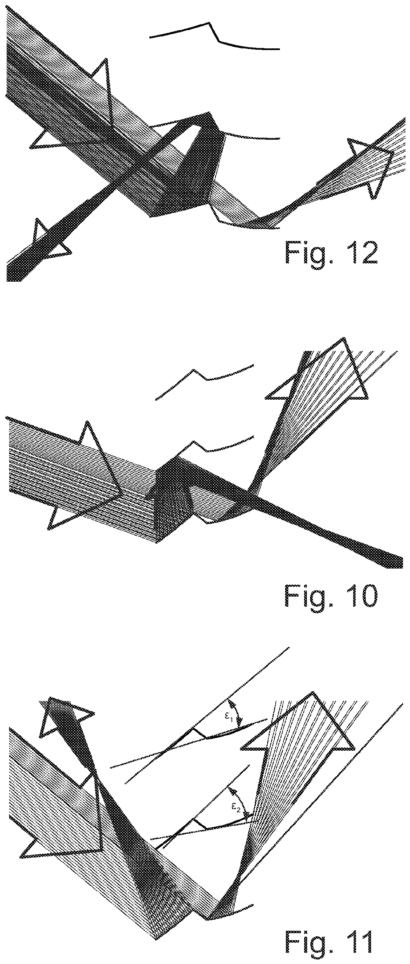

The advantage of the present invention under static points of view is the stiffness of the slat of thin aluminum material by the two-fold inflexion of the central partial face at the angle $\beta_1$, or $\beta_2$, and the concave shape of the surfaces which promote the edge rigidity of the slats. Under daylight-technological points of view, the structure has so been chosen that opposing optical functions will result in the portion situated towards the outer space and the portion situated towards the interior space. The portion situated towards the outer space deflects the high summer sun mono-reflectively; the portion situated towards the interior space mono-reflectively deflects the daylight to the ceiling (Figures 10 - 13). A further aim is to promote, by particularly shaping the z-shaped slats, a good optical lock to darken the room when the curtain is closed.

The term mono-reflective means that the slats having an optimum angle of incidence for fulfilling the guiding-in or guiding-out function, deflect the light by one single reflection into the desired direction without using the under side of the upper slat. This does not, however, exclude that in case of respective sun hours and slat angles of incidence, light deflection to the under side of the upper slat will result. It is rather decisive that, at eye level of a user, neither glares on the slat under side nor avoidable heat developments in case of high summer sun will occur. This is obtained in that the slat upper sides react independently without forming an optical multi-reflective system with the neighboring slat.

Further advantages will become obvious from the drawings wherein

| Fig. 1 | shows the slats according to the invention together with their optical functions, |
| Fig. 1.1 | shows a particularly advantageous embodiment of a slat according to the invention |
| Fig. 2 | shows the slat of the invention in a locked position |
| Figs. 3, 4, 5 and 6 | show variants of the slats of the invention in their basic shapes |
| Figs. 7, 8, 9 | show further variants of the slats of the invention in modifications of the basic shapes |
| Figs. 10 to 12 of | show the ray track of the deflected rays for various angles of incidence of the sun and slat tipping angle |
| Figs. 13 and 14 | show aluminum-extruded large slats with integrated artificial illumination. |

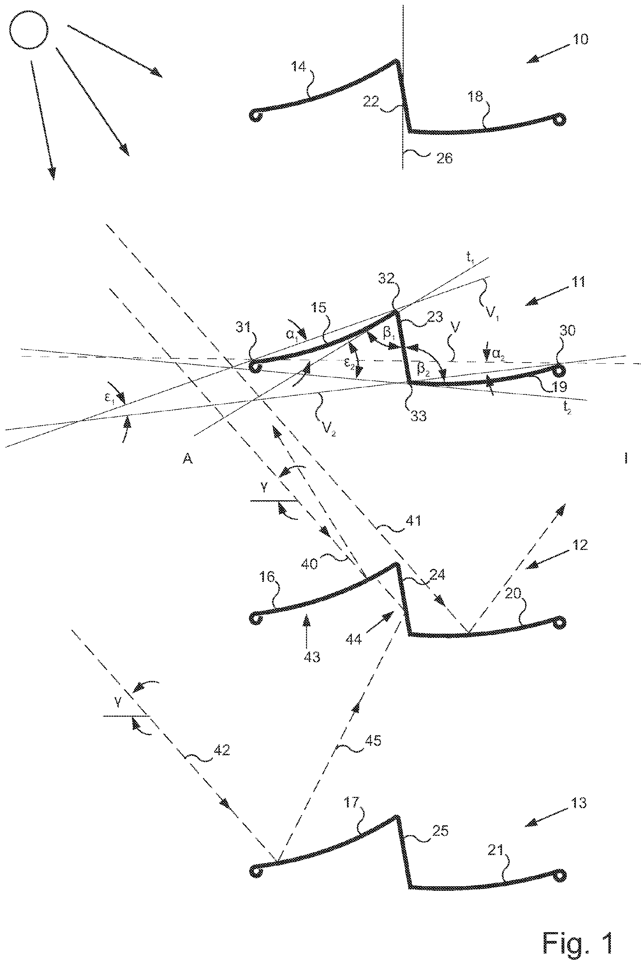

Figure 1 shows slat 10 to 13 consisting of partial faces 14 to 17 oriented to the outer space and the partial faces 18 to 21 oriented to the interior space, and the centrally disposed partial faces 22 to 25. In order to obtain the advantages substantial of the present invention, the following engineering instructions are valid: $\alpha_1 > \alpha_2$, $\beta_1 < \beta_2$. The first partial face disposed towards the outer space is always steeper than the portion oriented towards the interior space.

$\alpha_1$ is the angle formed between a connecting line V between two end points 30, 31 of a slat and a chord $V_1$ of the first concave partial face 15. The chord results as the connecting line between the end point 31 of the slat and the break 32 towards the center portion.

The angle $\alpha_2$ is obtained by a chord $V_2$ through the end point 30 and a further end point 33 of the partial face 19 at the break towards the center portion 23.

$\beta_1$ and $\beta_2$ are the angles between the central partial face 23 or of an assumed short connecting plane and a tangent $t_1$ or $t_2$ at the end points 32 and 33 of the partial faces disposed to the interior space or to the outside space, respectively.

Following this engineering instruction, a slat having two opposing optical properties is obtained. Sun radiation 40 impinging at an angle $\gamma$ on the partial face 16 oriented to the outer space and sun radiation 41 also impinging at an angle $\gamma$ on the partial face 20 oriented to the interior space, each, is deflected into a different direction. The sun impinging on partial face 16 is deflected, in the meaning of passive cooling, to the outside, the sun 41 impinging on partial face 20 to the inside for improving interior space illumination.

It is not essential of the invention to shape the partial faces on its upper sides circular and concave. The definitions on the connecting lines V serve only as a help for constructing with arched areas. The partial faces may also be made plane.

In their central portion 22 to 25, the slats include a perforation to draw a drawstring 26 in so that a swing-off of the slat towards the outside is possible. By tilting the slats, diverse light deflection effects may be obtained, also with reference to the varied sun incidence angles $\gamma$.

A further advantage of the slats is the screening out of sun irradiation 40 which is mono-reflectively deflected from the partial face 16 oriented to the outside back into the outer space. Rays 42/45 may also be guided to the under side 43, or 44, of the upper slat. In this way, blinding of the viewer from the interior space is advantageously avoided since the illuminated face portions 43/44 cannot, or only slightly, be perceived from the interior space.

Figure 1.1 shows once more the optical relations of the individual partial faces relative to each other. At the point of intersection S, between drawstring 47 and the third partial face 49, a perforation 48 is provided through which the drawstring 47 is threaded. In their closed status, the slats form an optical lock, as can be taken from Figure 2. The perforation 48 is advantageously staggered about the measure x from the middle of the central portion in the direction to the partial face oriented to the interior space and/or are imported into it.

In a horizontal position, between the central partial face 49 and the drawstring 47, there is an angle $\delta$ of between

5 and 50 degrees. According to the definition, the horizontal position is obtained when the connecting line V is approximately horizontally aligned.

Figure 2 shows the slats 50 to 52 from Figure 1 in a locked position. The drawstring 53 against which the slats lean on is shown. The slats include flanged laps 54 to 59 into which the clips for the loop strings (not shown) and the welting are drawn in so that the slats rest tightly one upon the other and in this way especially serve for darkening.

Figures 3, 4, 5 and 6 show variants of the slat of the invention, without the flanged lap though. The individual slats are characterized by the following features:

Figure 3 shows a small partial face 60 oriented to the outer space. In the case of this slat, light deflection towards the interior space via partial face 61 prevails. Figure 4 shows a broad partial face 62 oriented towards the outer space and a smaller partial face 63 oriented to the interior space. In this case, the sun deflection and the passive cooling prevail. Deviations of angles $\beta_1$ and $\beta_2$ are extreme. The central partial face 67 is broad and collects light radiation from the lower slat.

Figure 5 shows an almost symmetrical surface distribution of the partial faces 64 and 65.

Figure 6 is characterized by a very small central partial face 68.

Figures 7, 8 and 9 show further variants of the present invention.

The slats may show further inflexions and partial faces as shown in Figures 7, 8 and 9. Particularly by arching the central partial faces, as shown in Figures 8 or 9, favorable static effects may be obtained. They follow, nevertheless, the archaic basic types of Figures 1 to 6. The archaic basic shapes are shown, dotted, in Figures 7, 8 and 9 respectively. Particularly the data as to the angles $\beta_1$ and $\beta_2$ refer to the archaic basic shapes of variants 7 to 9, independently on whether individual surface portions are angle-shaped, rounded-off or, for light-technological or static reasons, undulated or concave on the upper side. Bending at the outer edges towards the side of the room or the outside, too, as in Figure 7, should be considered as details of the present invention, in order to obtain a better optical lock.

The present invention encompasses all variants of slat contours which follow the engineering instructions of the characterizing clause of the main claim independently on whether for instance the connecting piece between the partial faces oriented toward the outside or toward the inside are made straight or arched. The engineering instruction refers for instance to the shortest connection between end points of the above partial faces.

The end points of the light in-guiding or light out-guiding areas should be considered as the outer end points of the slat contours on the irradiation or the radiation side, independently on elongations or bending of appendices.

A particularly advantageous variant of the slat of Figure 10 - 12 is characterized by the following angles:

$$\alpha_1 \sim 20° \text{ for } \alpha_2 = 0°, \ \beta_1 \sim 115°, \ \beta_2 \sim 135°, \ \varepsilon \sim 35°$$

A slat having such an angular characteristic has, in the vertical, a distance relative to the slat disposed above or below of from $d/b \sim 0.7$ up t 0.9, preferably 0.81.

Within one curtain, the slats may be disposed at different angles of incidence the slats in the upper curtain portion being engaged more flat and in the lower part stronger. A typical angle of incidence of the slats below eye level of a standing person amounts to 16° relative to the horizontal. In the upper curtain portion, the slat, or the portion facing the interior space, may have an angle of incidence of 0° or of < 0°.

From above downwards, the slats may also be disposed continuously steeper in that, by means of different loop strings, the distance between the outer edges of neighboring slats is selected smaller and between the interior edge of neighboring slats is selected larger.

The slats are arranged either at the outside, at the inside or between the panes and show typical widths b of from 15 mm up to 300 mm and significantly more. The slats are produced either from steel or aluminum sheets by roll shaping or by an aluminum extrusion process, and are hung up rigidly, pivotally, or as venetian blinds.

The preferred area of application includes venetian blind slats which when hoisted up rest into one another thus forming small slat packages. To this end, one selects $\beta_1 > 90°$. The difference between $\beta_2 - \beta_1$ should be > 20°.

In Figures 10 to 11, the ray track for advantageous slat shaping and a slat position between 1 m and 1.6 m headroom are shown. One can clearly recognize that in spite of different sun incidence angles, the slat upper sides deflect the sun primarily mono-reflectively to the inside and to the outside. The portions oriented towards the interior space are undulated, that is they are concavely/convexly shaped.

In the upper window area, the slat may be disposed more flat in order to deflect the winter sun deeper into the interior space. This is illustrated in Figure 12. In the case of these slat positions, and in case of very flat sun, in addition, a deflection into the depth of the room at the first portion will occur. At higher angles of incidence, the sun impinges onto the reflective face oriented towards the interior space and deflects the light flat into the room while the portion facing the outer space deflects the light to the under side of the upper slat. In order to avoid glare at the under side, it is preferably coated in white, grey or colored.

In order to avoid reflections from the railing area in the eye of the user, the slats in the railing are disposed very steep.

Figure 14 shows large extruded aluminum slats having the characteristic structural features of the slat upper sides according to Figures 10 to 12 and other. The slats, however, show a belly 70 thus forming hollow sections. Into such hollow section in the area of the central partial face, a glass-covered illuminant 71 is built in which, as can be taken from Figure 15, will project light 72 to 75 into the depth of the room and to the ceiling.

In this way, an integrated artificial light and daylight solution has been created. Poorer daylight will be supported by the electric illumination from the direction of the deflected light from the sky. An integral light flux of artificial light and daylight will result. From light ray 56 it can be taken that the daylight reflection of the partial faces oriented towards the interior space will serve to deflect the artificial illumination as well. Such slats including illuminants 80 to 82 are preferably installed at a height of 1.5 m to 2.0 m and they are, therefore also suited to illuminate the interior room to its complete depth.

It is either a linear luminaire including reflector and glass cover 51 or light emitting diodes or other light-emitting illuminants which may be installed in the slat section.

A comparable artificial light and daylight solution is also possible for simple slat structures in that partial face 49 of Figure 1.1 is provided with LEDs or OLEDs.

Further embodiments consist in that the partial face disposed towards the outer space is provided with photovoltaic cells for current generation. In this case, the partial faces are preferably made planar and are equipped with organic or crystalline energy converters.

The underside of the slats may be micro prism structured in that prism-shaped longitudinal grooves extend in parallel to the longitudinal edges. By these longitudinal grooves which are preferably asymmetrically shaped, light radiation reflected from the partial face oriented toward the outer space to the under side of the upper slat, may be deflected to the outside. In any case, it can be avoided that, viewed from a user of the interior space, glare will come up at the slat under side. The slat under sides may also be shaped as micro prisms. This is particularly obvious when using extruded slats. As an alternative, the slat belly 91 of slats 90, as shown in dotted lines, has for instance a micro prismatic structure.

### Claims

1. Venetian blind made from a plurality of slats, each slat having a z-shaped contour at least on the slats' upper sides, wherein the partial faces of the z-shaped contour are angularly displaced relative to each other, and
   each slat upper side comprises at least three partial faces, wherein between first partial faces (14 - 17) disposed to outside serve as reflectors for the high angles of incidence and second partial faces situated to inside (18 - 21) at least one further, central barshaped, straight or arched third connecting partial faces (22 - 25) are disposed, and
   that a tangent $t_1$ at the end point (32) of the partial faces (15) disposed to outside, and a tangent $t_2$ at the endpoint (33) of the partial faces (19) situated towards the inside to central partial faces (23) or a connecting line between the partial faces (15, 19) form an angle $\beta_1$ with tangent $t_1$ and $\beta_2$ with tangent $t_2$, and whereby at least parts of the upper sides of the slats are made metallic-reflective,
   **characterized in**

   - first partial faces (14 - 17) disposed to outside serve as reflectors for the high angles of solar incidence and second partial faces (18 - 21) serve for re-directing daylight to inside, and the first (14 - 17) and second partial faces (18 - 21) are disposed spatially and angularly displaced relative to each other, and
   - that the first partial faces (14 - 17) disposed to outside are arranged in a larger angle ($\alpha_1$) to a connecting line (V) between endpoints (30, 31), and the partial faces (18 - 21) situated towards the inside are arranged in a smaller angle ($\alpha_2$) to a connecting line (V) between endpoints (30, 31), and
   - that the chords ($V_1$ and $V_2$) connecting the endpoints (31, 32) of the partial faces (14 - 17) disposed to outside and the endpoints (30, 33) of the partial faces (18 - 21) situated to inside form an acute angle $\varepsilon_1$ on the incidence side, and
   - the chords $V_1$ between the end points (31, 32) of the partial faces (14-17 and the chords $V_2$ between the endpoints (30, 33) of the partial faces (18 - 21) and a chord (V), between the edges (31) disposed to outside (31) and the edges (30) disposed to inside of the slats (11), angles $\alpha_1$ with chord $V_1$ and $\alpha_2$ with chord $V_2$ will be obtained, wherein $\alpha_1 > \alpha_2$.

2. Venetian blind according to claim 1,
   **characterized in**
   **that** the tangents $t_1$ and $t_2$ form an angle $\varepsilon_2$ and in that $\varepsilon_1 < \varepsilon_2$.

**3.** Venetian blind according to claim 1,
**characterized in**
**that** at least one partial face disposed towards outside (14 - 17) and/or one disposed to the inside (18 - 21) is concave-shaped at the upper side thereof.

**4.** Venetian blind according to claim 1,
**characterized in**
**that** at least within one third central partial face (49), perforations (48) for the drawstrings (47) are provided, off-center and nearer to the partial faces (18 - 21) situated towards the inside.

**5.** Venetian blind according to claim 1,
**characterized in**
**that** the angular deflection $\beta_1$ to $\beta_2$ is > 10° and < 70°.

**6.** Venetian blind according to claim 1,
**characterized in**
**that** the partial faces (14 - 17) disposed towards the outside are made broader and the partial faces (18 - 21) to the inside are made smaller, or vice versa.

**7.** Venetian blind according to one or a plurality of the foregoing claims,
**characterized in**
**that** the angular differences between $\alpha_1$ and $\alpha_2$ amount to between 5° and 40°, preferably 10° to 25°.

**8.** Venetian blind according to claim 1,
**characterized in**
**that** the slats include at its longitudinal edges at the outer and/or the interior side angular portions and/or flanged edges.

**9.** Venetian blind according to claim 1,
**characterized in**
**that** the individual slats are installed with a different tilt angles within the venetian blind curtains, wherein in the curtain portions above a height of 1.8 m as from the top edge of the finished floor, the connecting line (V) between the slat edges is horizontal or < 0° and, at least below a height of 1.6 m, is arranged > 0°.

**10.** Venetian blind according to one or a plurality of the foregoing claims,
**characterized in**
**that** at a curtain height of from 1 m to 1.5 m, at least individual slats are arranged in partial faces to the inside at inclination angles of the connecting line V relative to the horizontal of from 10° to 25°, preferably 20°, and that the first partial faces oriented towards the outer space are arranged at inclination angles of from 35° to 45°, preferably about 38°, and the second partial faces oriented towards the interior space are arranged at angles of from 15° to 25°, preferably 20°, relative to the horizontal.

**11.** Venetian blind according to one or a plurality of the foregoing claims,
**characterized in**
**that** in the area of the central partial faces (49), luminaires (71) with light exit to the inside are installed.

**12.** Venetian blind according to claim 1,
**characterized in**
**that** the partial faces oriented towards the outer space are covered with energy converters for current generation.

**13.** Venetian blind according to claim 1,
**characterized in**
**that** the under sides of the slats are linearly structured in that in the longitudinal direction of the slats prismatic shaped grooves are provided.

**Patentansprüche**

1. Jalousie bestehend aus einer Vielzahl von Lamellen, jede Lamelle verfügt mindestens auf den Oberseiten der Lamellen über eine z-förmige Kontur, wobei die Teilflächen der z-förmigen Kontur gegeneinander winkelversetzt angeordnet sind, und
jede Lamellenoberseite mindestens drei Teilflächen aufweist, wobei zwischen ersten nach außen gelegenen Teilflächen (14-17), die als Reflektoren für hohe Einfallswinkel dienen und zweiten, nach innen gelegenen Teilflächen (18-21) mindestens eine weitere, mittlere, stegförmige, gerade oder gewölbte dritte, verbindende Teilfläche (22-25) angeordnet ist, und
eine Tangente $t_1$ im Endpunkt (32) der zum Außenraum gelegenen Teilflächen (15) und eine Tangente $t_2$ im Endpunkt (33) der zum Innenraum gelegenen Teilflächen (19) zu mittleren Teilflächen (23) oder einer Verbindungslinie zwischen den Teilflächen (15, 19) einen Winkel $\beta_1$ mit Tangente $t_1$ und $\beta_2$ mit Tangente $t_2$ bilden, und wobei zumindest Teile der Lamellenoberseiten metallisch reflektierend ausgebildet sind,
**dadurch gekennzeichnet dass**

- Die ersten nach außen gelegenen Teilflächen (14-17) als Reflektoren für hohen Sonneneinfall und zweite Teilflächen (18-21) der Lichtumlenkung nach innen dienen, und dass die ersten (14-17) und die zweiten Teilflächen (18-21) räumlich und winkelförmig zueinander versetzt sind, und
- die ersten nach außen gelegenen Teilflächen (14-17) in einem größeren Winkel ($\alpha_1$) zu einer Verbindungslinie V zwischen den Endpunkten (30, 31) angeordnet sind, und dass die Teilflächen (18-21), die nach innen gelegen sind, in einem kleineren Winkel $\alpha_2$ zu der Verbindungslinie (V) zwischen den Endpunkten (30, 31) angeordnet sind, und
- die Sehnen ($V_1$ und $V_2$), die die Endpunkte (31, 32) der nach außen gelegenen Teilflächen (14-17) und die Endpunkte (30, 33) der nach innen gelegenen Teilflächen (18-21) verbinden, einen spitzen Winkel $\varepsilon_1$ auf der Einstrahlungsseite bilden, und
- die Sehnen $V_1$ zwischen den Endpunkten (31, 32) der Teilflächen (14-17) und die Sehnen $V_2$ zwischen den Endpunkten (30, 33) der Teilflächen (18-21) und einer Sehne (V) zwischen den nach außen gelegenen Kanten (31) und den nach innen gelegenen Kanten (30) der Lamellen (11) Winkel $\alpha_1$ mit der Sehne $V_1$ und $\alpha_2$ mit der Sehne $V_2$ bilden, wobei $\alpha_1 > \alpha_2$ ist.

2. Jalousie nach Anspruch 1, **dadurch gekennzeichnet, dass**
die Tangenten $t_1$ und $t_2$ einen Winkel $\varepsilon_2$ bilden, wobei $\varepsilon_1 < \varepsilon_2$ ist.

3. Jalousie nach Anspruch 1, **dadurch gekennzeichnet, dass** mindestens eine zum Außenraum (14 - 17) und/oder eine zum Innenraum (18 - 21) gelegene Teilfläche an ihrer Oberseite konkav ausgeformt ist.

4. Jalousie nach Anspruch 1, **dadurch gekennzeichnet, dass** mindestens innerhalb einer dritten mittleren Teilfläche (49) Lochungen (48) für die Aufzugsbänder (47) außermittig, näher zu den zum Innenraum orientierten Teilflächen (18 - 21) angeordnet sind.

5. Jalousie nach Anspruch 1, **dadurch gekennzeichnet, dass** die Winkelabweichung $\beta_1$ zu $\beta_2 > 10°$ und $< 70°$ betragen.

6. Jalousie nach Anspruch 1, **dadurch gekennzeichnet, dass** die zum Außenraum gelegenen Teilflächen (14 - 17) breiter und die zum Innenraum gelegenen Teilflächen (18-21) schmaler ausgebildet sind und umgekehrt.

7. Jalousie nach einem oder mehreren der vorangegangenen Ansprüche, **dadurch gekennzeichnet, dass** die Winkelabweichungen zwischen $\alpha_1$ zu $\alpha_2$ zwischen 5° und 40°, vorzugsweise 10° bis 25° betragen.

8. Jalousie nach Anspruch 1, **dadurch gekennzeichnet, dass** die Lamellen an ihren Längskanten auf der Außen- und/oder der Innenseite abgewinkelte Teilstücke und/oder Bördelungen aufweisen.

9. Jalousie nach Anspruch 1, **dadurch gekennzeichnet, dass** die einzelnen Lamellen innerhalb der Jalousiebehänge mit unterschiedlicher Neigung eingebaut sind, wobei in den Behangteilen oberhalb 1,8 m Höhe über Oberkante Fertigfußboden die Verbindungslinie (V) zwischen den Lamellenkanten horizontal oder < 0° und mindestens unterhalb 1,6 m Höhe steiler angeordnet sind.

10. Jalousie nach einem oder mehreren der vorhergehenden Ansprüche, **dadurch gekennzeichnet, dass** mindestens einzelne Lamellen in Behanghöhe 1 m bis 1,5 m in zum Innenraum angeordneten Teilflächen in Neigungswinkeln der Verbindungslinie V zur Horizontalen von 10° bis 25°, vorzugsweise ca. 20°, angeordnet sind, und dass die ersten, zum Außenraum orientierten Teilflächen in Neigungswinkeln von 35° bis 45°, vorzugsweise ca. 38°, angeordnet sind, und die zweiten, zum Innenraum orientierten Teilflächen in Winkeln von 15° bis 25°, vorzugsweise 20° zur Horizontalen angeordnet sind.

**11.** Jalousie nach einem oder mehreren der vorhergehenden Ansprüche, **dadurch gekennzeichnet, dass** im Bereich der mittleren Teilflächen (49) Leuchten (71) mit Lichtaustritt zum Innenraum eingebaut sind.

**12.** Jalousie nach Anspruch 1, **dadurch gekennzeichnet, dass** die zum Außenraum gelegenen Teilflächen mit Energiewandlern zur Stromerzeugung belegt sind.

**13.** Jalousie nach Anspruch 1, **dadurch gekennzeichnet, dass** die Unterseiten der Lamellen linear strukturiert sind, indem in Längsrichtung der Lamellen prismatisch ausgeformte Rillen eingebracht sind.

## Revendications

**1.** Store vénitien constitué par une pluralité de lamelles, dans lequel chaque lamelle présente un contour en forme de z au moins sur les faces supérieures des lamelles, les surfaces partielles du contour en forme de z étant agencées en décalage angulaire les unes par rapport aux autres, et

chaque face supérieure des lamelles comprend au moins trois surfaces partielles, et entre les premières surfaces partielles (14 - 17), situées vers l'extérieur et servant de réflecteurs pour des angles d'incidence élevés, et les secondes surfaces partielles (18 - 21) situées vers l'intérieur, il est prévu au moins une troisième surface partielle centrale (22 - 25) de liaison, droite ou arquée, en forme de barrette, et

une tangente $t_1$ au point d'extrémité (32) des surfaces partielles (15) situées vers l'extérieur, et une tangente $t_2$ au point d'extrémité (33) des surfaces partielles (19) situées vers l'intérieur par rapport à des surfaces partielles centrales (23) ou à une ligne de liaison entre les surfaces partielles (15, 19) forment un angle $\beta_1$ avec la tangente $t_1$ et $\beta_2$ avec la tangente $t_2$, et des parties au moins des faces supérieures des lamelles sont réalisées métalliques réfléchissantes,

**caractérisé en ce que**

- les premières surfaces partielles (14 - 17) situées vers l'extérieur servent en tant que réflecteurs pour les angles élevés d'incidence solaire, et les secondes surfaces partielles (18 - 21) servent à renvoyer la lumière du jour vers l'intérieur, et **en ce que** les premières (14 - 17) et les secondes surfaces partielles (18 - 21) sont décalées spatialement et angulairement les unes par rapport aux autres, et

- les premières surfaces partielles (14 - 17) situées vers l'extérieur sont agencées sous un angle plus grand ($\alpha_1$) par rapport à une ligne de liaison (V) entre les points d'extrémité (30, 31), et **en ce que** les surfaces partielles (18 - 21) qui sont situées vers l'intérieur sont agencées sous un angle plus petit ($\alpha_2$) par rapport à la ligne de liaison (V) entre les points d'extrémité (30, 31), et

- les cordes ($V_1$ et $V_2$) qui relient les points d'extrémité (31, 32) des surfaces partielles (14 - 17) situées vers l'extérieur et les points d'extrémité (30, 33) des surfaces partielles (18 - 21) situées vers l'intérieur forment un angle aigu $\varepsilon_1$ sur le côté incidence, et

- les cordes $V_1$ entre les points d'extrémité (31, 32) des surfaces partielles (14 - 17) et les cordes $V_2$ entre les points d'extrémité (30, 33) des surfaces partielles (18 - 21) et une corde (V) entre les arêtes (31) situées vers l'extérieur et les arêtes (30) situées vers l'intérieur des lamelles (11) forment un angle $\alpha_1$ avec la corde $V_1$ et $\alpha_2$ avec la corde $V_2$, dans lequel $\alpha_1 > \alpha_2$.

**2.** Store vénitien selon la revendication 1, **caractérisé en ce que** les tangentes $t_1$ et $t_2$ forment un angle $\varepsilon_2$, dans lequel $\varepsilon_1 < \varepsilon_2$.

**3.** Store vénitien selon la revendication 1, **caractérisé en ce qu'**au moins une surface partielle située vers l'extérieur (14 - 17) et/ou au moins une surface partielle située vers l'intérieur (18 - 21) est réalisée sous forme concave sur sa face supérieure.

**4.** Store vénitien selon la revendication 1, **caractérisé en ce qu'**au moins à l'intérieur d'une troisième surface partielle centrale (49) sont prévus des trous (48) pour les bandes de relevage (47), disposés de façon excentrique plus près vers les surfaces partielles (18 - 21) situées vers l'intérieur.

**5.** Store vénitien selon la revendication 1, **caractérisé en ce que** la déviation angulaire de $\beta_1$ par rapport à $\beta_2$ est > 10° et < 70°.

**6.** Store vénitien selon la revendication 1, **caractérisé en ce que** les surfaces partielles situées vers l'extérieur (14 - 17) sont réalisées plus larges et les surfaces partielles situées vers l'intérieur (18 - 21) sont réalisées plus étroites, ou inversement.

**7.** Store vénitien selon l'une ou plusieurs des revendications précédentes, **caractérisé en ce que** les différences angulaires entre $\alpha_1$ et $\alpha_2$ sont comprises entre 5° et 40°, de préférence de 10° à 25°.

**8.** Store vénitien selon la revendication 1, **caractérisé en ce que** les lamelles présentent sur leurs arêtes longitudinales, sur la face extérieure et/ou intérieure, des portions angulaires et/ou des bordures rabattues.

**9.** Store vénitien selon la revendication 1, **caractérisé en ce que** les lamelles individuelles sont montées à des inclinaisons différentes à l'intérieur des rideaux de store vénitien, et dans les portions de rideau au-dessus d'une hauteur de 1,8 m du niveau supérieur du plancher fini, la ligne de liaison (V) entre les arêtes des lamelles est horizontale ou < 0°, et au moins au-dessous d'une hauteur de 1,6 m, elle est disposée > 0°.

**10.** Store vénitien selon l'une ou plusieurs des revendications précédentes, **caractérisé en ce qu'**à une hauteur du rideau de 1 m à 1,5 m, au moins des lamelles individuelles sont agencées dans des surfaces partielles situées vers l'intérieur à des angles d'inclinaison de la ligne de liaison V par rapport à l'horizontale de 10° à 25°, de préférence à environ 20°, et les premières surfaces partielles orientées vers l'extérieur sont agencées à des angles d'inclinaison de 35° à 45°, de préférence à environ 38°, et les secondes surfaces partielles orientées vers l'intérieur sont agencées à des angles de 15° à 25°, de préférence à 20° par rapport à l'horizontale.

**11.** Store vénitien selon l'une ou plusieurs des revendications précédentes, **caractérisé en ce que** dans la zone des surfaces partielles centrales (49) sont montés des luminaires (71) ayant leur sortie de lumière vers l'intérieur.

**12.** Store vénitien selon la revendication 1, **caractérisé en ce que** les surfaces partielles orientées vers l'extérieur sont recouvertes de convertisseurs d'énergie pour la génération de courant.

**13.** Store vénitien selon la revendication 1, **caractérisé en ce que** les faces inférieures des lamelles sont structurées linéairement du fait que des rainures en forme prismatique sont prévues en direction longitudinale des lamelles.

Fig. 1

Fig. 1.1

$\alpha_1 > \alpha_2$
$\beta_1 < \beta_2$
$\varepsilon_1 < \varepsilon_2$

Fig. 2

Fig. 3

Fig. 4

Fig. 5

Fig. 6

Fig. 13

Fig. 7

Fig. 8

Fig. 9

Fig. 14

Fig. 12

Fig. 10

Fig. 11

**EP 2 534 329 B1**

## REFERENCES CITED IN THE DESCRIPTION

**Patent documents cited in the description**

- DE 10260711 A1
- US 4799526 A
- DE 19929138
- DE 4310718 A1
- US 6318441 B
- DE 19845424 A1